# EUROPEAN PATENT SPECIFICATION

(11) **EP 0 358 442 B1**
(45) Date of publication and mention of the grant of the patent: **22.02.1995**
(21) Application number: 89308962.3
(22) Date of filing: 05.09.1989
(51) Int. Cl.: G11B 23/03

(54) **Disk cartridge**
Plattenkassette
Cassette à disque

(30) Priority: 09.09.1988 JP 226173/88; 09.09.1988 JP 226174/88
(43) Date of publication of application: 14.03.1990
(73) Proprietor: CANON KABUSHIKI KAISHA, Tokyo (JP)
(72) Inventor: Imokawa, Naoki, Tokyo (JP)
(74) Representative: Beresford, Keith Denis Lewis

(56) References cited:
- EP-A- 0 299 783
- US-A- 4 609 105
- PATENT ABSTRACTS OF JAPAN vol. 4, no. 31 (P-2)(513) 18 March 1980, & JP-A-55 4710 (TOPPAN INSATSU K.K.) 14 January 1980,
- PATENT ABSTRACTS OF JAPAN vol. 9, no. 163 (P-371)(1886) 09 July 1985, & JP-A-60 40581 (HITACHI SEISAKUSHO K.K.) 02 March 1985,
- PATENT ABSTRACTS OF JAPAN vol. 11, no. 72 (P-554)(2519) 05 March 1987, & JP-A-61 233481 (CANON INC.) 17 October 1986,
- PATENT ABSTRACTS OF JAPAN vol. 11, no. 211 (P-594)(2658) 09 July 1987, & JP-A-62 33385 (TEIJIN LTD) 13 February 1987,

## Description

### BACKGROUND AND SUMMARY OF THE INVENTION

This invention relates to a disk cartridge made into a cassette so as to be mounted on a drive device with a disk-like recording medium contained therein.

In recent years, optical disks have been utilized as information recording mediums in the field of information and data. An optical disk has a recording surface on the front surface thereof and has its both surfaces covered with protective coatings, but uses an optical signal such as a laser light to read information from the recording surface of the disk and therefore when a flaw or flaws, dust, stains, etc. are present on the surfaces of the protective coatings, reading of information becomes impossible. So it is conceivable to contain the disk within a case, but it is inconvenient to put the disk into and out of the case each time the disk is used, and the direct touch of the hand leads to the possibility of imparting a flaw or flaws, dust, stains, etc. to the disk. In order to prevent this, disk cartridges with a shutter mechanism which can be used without being put into and out of a case are used nowadays.

However, since the optical disk is rotated while being contained in a disk cartridge, the dimensions of the inner wall of the disk containing portion must be made sufficiently greater than the outer diameter of the disk with the amount of eccentricity between the disk and rotating portion of a recording-reproducing apparatus taken into account. Also, during the transportation or the like of the cartridge, the disk may slidingly contact with the inner surface of the cartridge, whereby the disk may be damaged or the scrape powder of the disk and the cartridge may be produced to make reading of information impossible.

As a method for solving such problem, there is conceived a method of designing a stepped portion on the inner surface of the disk containing portion at such a position that will bear against only the inner peripheral portion and/or the end portion of the disk which is a non-recording portion, causing the disk to float up from the inner surface of the cartridge and holding the disk. However, where a stepped portion is provided on the inner peripheral surface of the disk containing portion at such a position that will bear against only the inner peripheral portion of the disk, if an extraneous shock is applied to an upper case, the upper case itself will be distorted and the recording portion on the outer peripheral portion of the disk will contact with the inner surface of the cartridge and will be damaged thereby. Where a stepped portion is provided on the inner surface of the disk containing portion at such a position that will bear against only the end portion of the disk, if an extraneous shock is applied to the upper case, the upper case itself will be distorted and the recording portion on the inner peripheral portion of the disk will contact with the inner surface of the cartridge and will be damaged thereby.

Reference is made to Patent Abstracts of Japan, Volume 4, No. 31 (p-2) [513], and Japanese Patent No. A-55-4710 which disclose a disk cartridge according to the preamble of claim 1; and to Patent Abstracts of Japan, Volume 11, No. 211 (p-594) [2658] and Japanese Patent No. A-62-33385 which disclose disk-cartridges in which the disk is supported by stepped portions of the cartridge walls at non-recording portions near the inner and outer periphery of the disk.

Reference is also made to Japanese Patent Application Laid-open No. 55-22294 which discloses a cartridge having stepped portions which engage the disk in the non-recording or non-playback mode but are moved apart during the recording or playback to permit free rotation of the disk.

It is the object of the present invention to eliminate the above-noted disadvantages and to provide a disk cartridge which can contain a disk therein without the inner surface of the cartridge contacting with the recording portion of the disk and which is simplified in internal structure and can be manufactured at a low cost.

A disk cartridge according to the invention is defined by claim 1.

In the accompanying drawings:

Figure 1 is an exploded perspective view showing an embodiment of a disk cartridge according to the present invention.

Figures 2, 3, 4 and 6 are cross sectional views showing an embodiment of the disk cartridge according to the present invention.

Figure 5 is an enlarged cross-sectional view of a portion of the cross-sectional view shown in Figure 4.

Figure 7 is a plan view showing another embodiment of the disk cartridge according to the present invention.

Figure 8 is a cross-sectional view of the cartridge shown in Figure 7.

Figures 9 and 10 are cross-sectional views of the disk cartridge when it contains a disk therein.

Figure 11A is a cross-sectional view when a shock is applied to the disk cartridge, and Figure 11B is an enlarged cross-sectional view of the then corner portion.

Figures 12 and 13 are plan views of the inner surfaces of disk cartridges.

### DESCRIPTION OF THE PREFERRED EMBODIMENTS

The present invention will hereinafter be described in detail with respect to some embodiments thereof shown in the drawings.

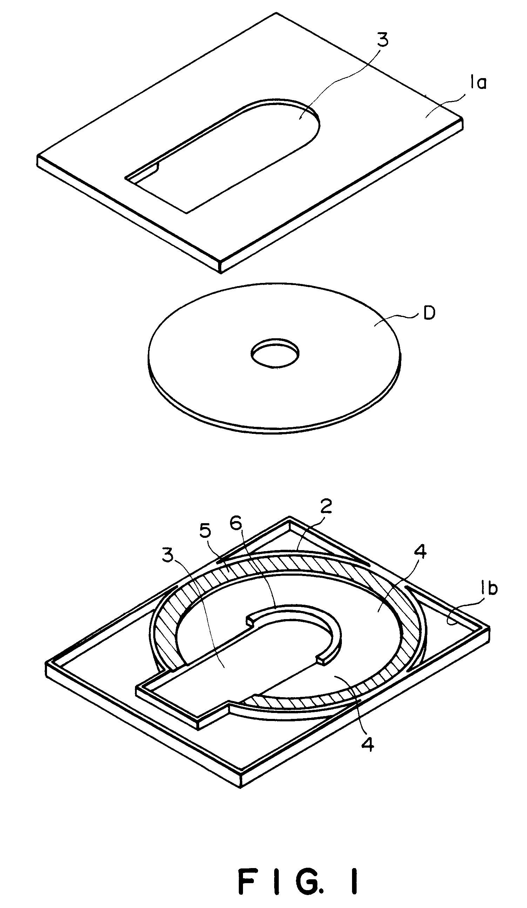

Referring to Figure 1 which is an exploded perspective view schematically illustrating the disk cartridge of the present invention, a lower case 1a and an upper case 1b which are substantially of the same shape are adhesively secured or screw-set to each other with an optical disk D interposed therebetween, and the disk D is contained in the containing portion of a case inside a circular inner wall 2 along the configuration of the disk. That is, the disk D is contained in the concave containing portion of the case. Openings 3 for effecting the recording and reading of information on the disk D are formed in the lower case 1a and the upper case 1b, respectively, and a shutter mechanism, not shown, is mounted in the openings 3. A stepped portion 5 is provided on an inner surface 4 along the inner side of the circular inner wall 2 of the disk containing portion, and a semi-arcuate convex wall portion 6 is provided around the opening 3 which is the vicinity of the central portion of the disk containing portion, the wall portion 6 being made higher than the stepped portion 5. In other words, the case has a circular concave portion for containing the disk therein, and this concave portion has a level difference portion provided near the outer peripheral portion thereof, and has a convex portion provided near the central portion thereof. The height of said convex portion relative to the bottom surface of said concave portion is greater than the height of said level difference portion.

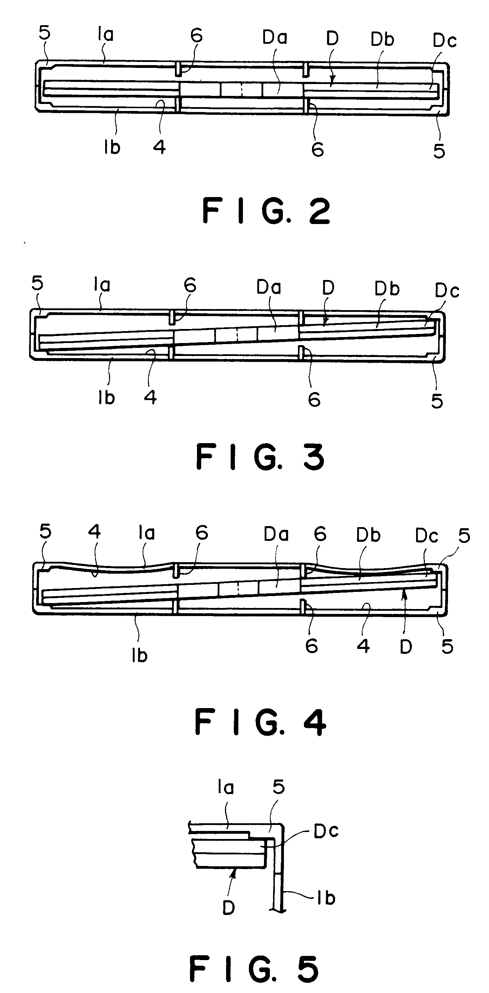

Figures 2, 3 and 4 are cross-sectional views of the cartridge as it contains the disk D therein. Figure 2 shows the state during the normal time, Figure 3 shows the state when the disk is inclined, and Figure 4 shows the state when a shock is applied to the cartridge.

Figure 5 is an enlarged cross-sectional view of a corner portion of the upper case 1b. Figure 2 shows the state of the disk D when the cartridge is placed horizontally. When the disk D is being thus contained horizontally in the disk containing portion, the disk D contacts with the wall portion 6, but does not contact with the stepped portion 5. Figure 3 shows that when the disk is inclined, the wall portion 6 only contacts with the non-recording portion Da on the inner peripheral portion of the disk D and the stepped portion 5 only contacts with the non-recording portion Dc at the end edge of the disk D, and that the recording portion Db of the disk D does not contact with the inner surface 4 of the cartridge.

As shown in Figure 4, when an extraneous shock is applied to the upper case 1a, the upper case 1a itself is distorted and at the same time, the disk D is also momentarily distorted. So, the cartridge of the present invention is provided in the outer peripheral portion thereof with the stepped portion 5 lower than the wall portion 6 of the inner pheripheral portion of the inner surface 4, whereby the disk D and the inner surface 4 has a predetermined angle therebetween, and as shown in Figure 5, even if the disk D is inclined, it will only cause the collision of the non-recording portion Dc at the end edge of the disk D. If the wall portion on the inner peripheral portion and the stepped portion on the outer peripheral portion are of the same height, the disk will be held parallel to the inner surface, and due to the eccentricity during the rotation of the disk, the stepped portion on the outer peripheral portion of the disk containing portion may slidingly contact with the outer peripheral portion of the disk to damage the disk or produce the scrape powder of the disk and the cartridge, thereby making the reading of information impossible, but in the present invention, there is no such fear because the wall portion on the inner peripheral portion is higher than the stepped portion on the outer peripheral portion.

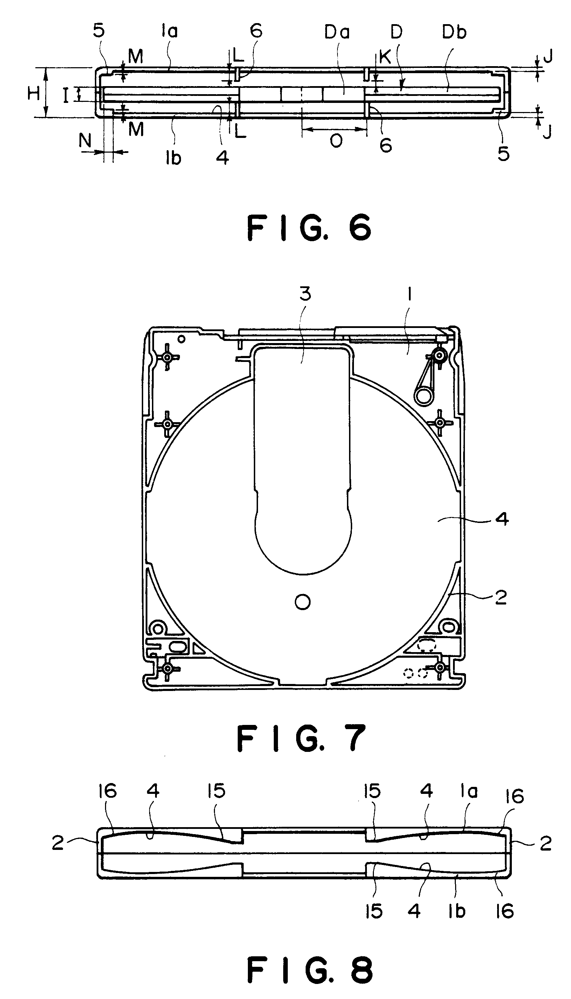

The specific dimensions of the cartridge will now be described with reference to Figure 6. The thickness H of the cartridge is H = 11 mm, the thickness I of the disk is I = 2.5 mm, the thickness J of the case is J = 2.5 mm, the clearance K between the disk and the wall portion on the inner peripheral portion is K = 2 mm, the height L of the wall portion on the inner peripheral portion from the surface of the case is L = 0.75 mm, the height M of the stepped portion on the outer peripheral portion from the surface of the case is M = 0.4 mm, the difference L-M between the heights of the wall portion and the stepped portion is L-M = 0.35 mm, the distance N between the end surface of the outer peripheral side of the disk and the end surface of the inner peripheral side of the stepped portion when the center of the disk is coincident with the center of the containing portion of the cartridge is N = 0.3 mm, and the distance O between the center of the containing portion of the cartridge and the wall portion on the inner peripheral portion is O = 22 mm. Here, the difference L-M between the heights of the wall portion and the stepped portion may preferably be 0.1 mm ≦ L-M ≦ 1.0 mm. If L-M is smaller than 0.1 mm, the stepped portion on the outer peripheral portion will contact with the outer peripheral portion of the disk due to the eccentricity during the rotation of the disk to thereby damage the disk, and if L-M is greater than 1.0 mm, when an extraneous shock is applied to the case, the surface of the case will contact with the recording portion of the disk to thereby damage the recording portion of the disk. Also, the distance N between the end surface of the outer peripheral side of the disc and the end surface of the inner peripheral side of the stepped portion may preferably be 0.1 mm ≦ N ≦ 0.5 mm. If N is smaller than 0.1 mm, the corner of the end surface of the outer peripheral side of the disk may contact with the corner of the end surface of the inner peripheral side of the stepped portion, whereby the disk or the cartridge may be broken or the scrape powder of the disk and the cartridge may be produced to make the reading of information impossible. If N is greater than 0.5 mm, the stepped portion on the outer peripheral portion of the containing portion may contact with the recording portion on the outer peripheral portion of the disk to thereby damage the recording portion.

As described above, the disk cartridge according to the present invention is provided with a stepped portion inside the outer peripheral portion of the disk containing portion and with a wall portion higher than the stepped portion near the central portion of the disk containing portion, thereby making it possible to contain the disk always without the recording portion of the disk being brought into contact with the inner surface of the cartridge, and making the disk less prone to damage.

Another embodiment of the disk cartridge according to the present invention will now be described.

Figure 7 is a plan view of the inner side of a disk cartridge 1 containing a disk therein, and Figure 8 is a cross-sectional view thereof. The disk cartridge 1 is formed into a thin box shape by two cases 1a and 1b of substantially the same shape being united together. The disk cartridge 1 is formed with a circular inner wall 2 surrounding the disk and extending along the configuration of the disk, and a rectangular shutter opening 3. A shutter mechanism, not shown, is mounted in the opening 3. The interior of the circular inner wall 2 provides a disk containing portion, and the inner diameter of the inner wall 2 is made greater than the outer diameter of the disk so as not to hinder the rotation of the disk. Also, as shown in Figure 8, the thickness of the inner surface 4 of the disk containing portion is made into a smooth concave curve thickened toward the inner peripheral portion 15 and the outer peripheral portion 16 of the inner wall 2, and the inner peripheral portion 15 is thicker than the outer peripheral portion 16.

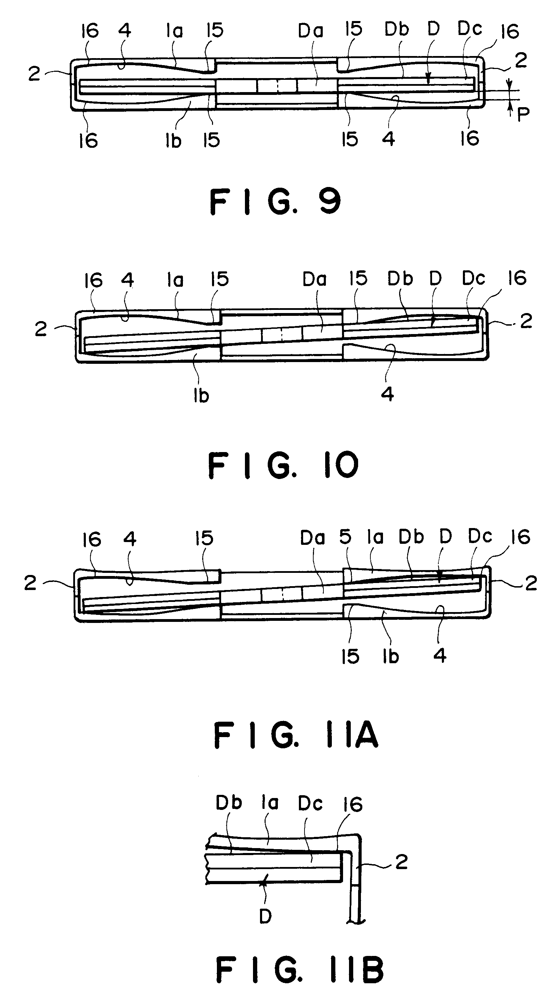

Figure 9 shows the state of the disk D when the cartridge is placed horizontally. When the disk D is thus contained horizontally in the disk containing portion, the disk D contacts with the inner peripheral portion 15 of the containing portion, but does not contact with the outer peripheral portion 16.

As shown, the inner surface 4 of the disk containing portion has a portion made into a concavely curved surface which approaches the disk D toward the inner peripheral surface 15 and the outer peripheral surface 16.

Also, the disk containing portion has a portion made into a concavely curved surface which becomes greater in thickness toward the inner peripheral portion 15 and the outer peripheral portion 16, and the thickness of the inner peripheral portion 15 is greater than the thickness of the outer peripheral portion 16.

Here, the difference P between the thickness of the inner peripheral portion 15 and the thickness of the outer peripheral portion 16, as in the embodiment shown in Figure 6, may preferably be 0.1 mm ≦ P ≦ 1.0 mm. If P is smaller than 0.1 mm, the outer peripheral portion 16 will contact with the outer peripheral portion of the disk due to the eccentricity during the rotation of the disk to thereby injure the disk, and if P is greater than 1.0 mm, when an extraneous shock is applied to the case, the surface of the case will contact with the recording portion of the disk to thereby damage the recording portion of the disk.

Referring to Figure 10 which is a cross-sectional view showing a state in which the disk D is inclinedly contained, the disk D is nipped by and between two cases 1a and 1b. However, in the disk containing portion surrounding the disk D, there is a play with respect to the diametrical direction of the disk D and a direction perpendicular to the diameter of the disk, and the disk D does not contact with any portion of the inner surface 4 when the disk D is mounted and rotated on the rotating portion of a drive device.

Also, when the disk is not mounted on the drive device, in whatever direction the disk cartridge 1 may be inclined, only the inner peripheral portion Da or the peripheral end portion Dc of the disk D contacts with the inner peripheral portion 15 or the outer peripheral portion 16, respectively, of the inner surface 4, and the recording portion Db intermediate of the inner peripheral portion Da and the peripheral end portion Dc does not contact with the inner surface 4.

Further, even when the disk cartridge 1 is momentarily deformed as shown in Figure 11A by a shock such as a fall, the peripheral end portion Dc of the disk D will first collide against the outer peripheral portion 16 of the inner surface 4 because the inner surface 4 is made into a smooth concave curve which becomes thicker inside the cartridge toward the inner peripheral portion 15 and the outer peripheral portion 16 of the inner wall and the inner peripheral portion 15 is thicker than the outer peripheral portion 16, and therefore the recording portion Db of the disk D will be saved from contacting with the inner surface 4.

Thus, in a disk cartridge containing therein a disk-like recording medium formed with a recording portion thereon, the inner surface of the disk containing portion surrounding the recording medium is constructed so as to have a portion made into a concavely curved surface which becomes thicker inside the cartridge toward the inner peripheral portion and the peripheral end portion, and the inner peripheral portion is made thicker than the peripheral end portion, whereby the disk can be contained in the cartridge without the inner surface of the cartridge contacting with the recording portion of the disk. Also, if the inner surface of the disk containing portion of the cartridge is made into a curved surface, it can be avoided that stress concentrates in a part of the containing portion.

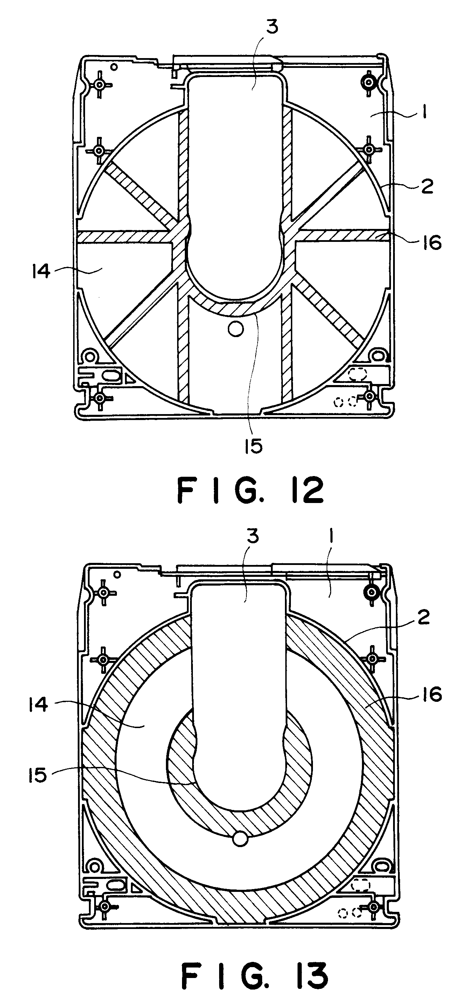

Figures 12 and 13 are plan views of the inner surfaces of disk cartridges according to further embodiments. Only that portion of the inner surface 14 of the containing portion which is indicated by hatching, as in the embodiment shown in Figures 7 and 8, is formed into a concavely curved surface which becomes thicker inside the cartridge toward the inner peripheral portion 15 and the outer peripheral portion 16, and the other portions are planar. That is, this cartridge is of such structure that a portion of the inner surface of the disk containing portion is made into a concavely curved surface which becomes thicker inside the cartridge toward the inner peripheral portion and the peripheral end portion, and a concavely curved surface which becomes thicker inside the cartridge toward the inner peripheral portion and the peripheral end portion is provided near the inner peripheral portion and the peripheral end portion of the inner surface of the disk containing portion. Again in these embodiments, as in the embodiment shown in Figures 7 and 8, the inner peripheral portion is made thicker than the peripheral end portion, whereby the disk can be contained in the cartridge without the inner surface of the cartridge contacting with the recording portion of the disk.

As described above, the whole or part of the inner surface of the containing portion of the disk cartridge which surrounds the disk is constructed of a concavely curved surface and the inner peripheral portion of the inner surface of the containing portion is made thicker than the peripheral end portion, whereby the contact of the inner surface of the cartridge with the recording portion of the disk can be prevented to thereby protect the disk from injury.

## Claims

1. A disk cartridge for use with apparatus adapted to receive and interact with said cartridge, said cartridge comprising an upper plate (1a), a lower plate (1b), said plates being spaced apart by side walls to form a containing space containing a flat disk recording medium, a first stepped portion (5) provided on each of the upper and lower plates at the periphery of said containing space and a second stepped portion (6) provided on each of the upper and lower plates in the vicinity of the centre of said containing space, the space between the two second stepped portions being less than the space between the two said first stepped portions, at least one plate having an aperture for exposing a recording surface of said recording medium which is covered by shutter mechanism in an inoperative mode,
characterised in that the dimension between the two second stepped portions is selected such that the dimension of the space between said second stepped portions (6) is larger than the thickness of the recording medium so that any angular disposition of said disk (D) relative to said lower and upper plates (1b, 1a) is limited by said first stepped portions (5) together with said second stepped portions (6) in such a way that the recording surface of the disk is at no time engaged by the inside surfaces of the plates.

2. A disk cartridge according to claim 1, characterised in that the difference between the height (m) of the first stepped portion and the height of the second stepped portion is from 0.1 mm to 1.0 mm.

## Patentansprüche

1. Plattenkassette zum Verwendung bei einer Vorrichtung, die geeignet ist, die Kassette aufzunehmen und mit dieser zusammenzuwirken, wobei die Kassette aufweist: eine obere Platte (1a), eine untere Platte (1b), wobei die Platten durch Seitenwände voneinander beabstandet sind, um einen Aufnahmeraum auszubilden, der ein flaches Platten-Aufzeichnungsmedium aufnimmt, einen ersten gestuften Abschnitt (5), der sowohl an der oberen als auch an der unteren Platte am Umfang des Aufnahmeraums vorgesehen ist, und einen zweiten gestuften Abschnitt (6), der sowohl an der oberen als auch an der unteren Platte in der Nähe des Mittelpunktes des Aufnahmeraumes vorgesehen ist, wobei der Raum zwischen den zwei zweiten gestuften Abschnitten kleiner als der Raum zwischen den zwei ersten gestuften Abschnitten ist, wobei zumindest eine Platte eine Öffnung zum Freilegen einer Aufzeichnungsfläche des Aufzeichnungsmediums hat, die in einem Nicht-in-Betrieb-Modus durch einen Verschlußmechanismus bedeckt ist,
dadurch gekennzeichnet, daß
die Abmessung zwischen den zwei zweiten gestuften Abschnitten in einer solchen Weise gewählt wird, daß die Abmessung des Raumes zwischen den zweiten gestuften Abschnitten (6) größer ist als die Dicke des Aufzeichnungsmediums, so daß eine beliebige Winkelanordnung der Platte (D) in bezug auf die untere und obere Platte (1b, 1a) durch die ersten gestuften Abschnitte (5) zusammen mit den zweiten gestuften Abschnitten (6) in einer solchen Weise begrenzt ist, daß die Aufzeichnungsfläche der Platte zu keinem Zeitpunkt mit den Innenflächen der Platten in Eingriff steht.

2. Plattenkassette nach Anspruch 1, dadurch gekennzeichnet, daß die Differenz zwischen der Höhe (m) des ersten gestuften Abschnitts und der Höhe der zweiten gestuften Abschnitts 0,1mm bis 1,0mm beträgt

## Revendications

1. Cartouche à disque à utiliser avec un appareil destiné à recevoir et interagir avec ladite cartouche, ladite cartouche comportant une plaque supérieure (1a), une plaque inférieure (1b), lesdites plaques étant espacées par des parois latérales pour former un espace contenant un support d'enregistrement à disque plat, une première partie épaulée (5) prévue sur chacune des plaques supérieure et inférieure à la périphérie dudit logement et une seconde partie épaulée (6) prévue sur chacune des plaques supérieure et inférieure au voisinage du centre dudit logement, l'espace entre les deux secondes parties épaulées étant inférieur à l'espace entre lesdites deux premières parties épaulées, au moins une plaque présentant une ouverture pour mettre à découvert une surface d'enregistrement dudit support d'enregistrement qui est recouvert par un mécanisme obturateur dans un mode inactif,
caractérisée en ce que la dimension entre les deux secondes parties épaulées est choisie de façon que la dimension de l'espace entre lesdites secondes parties épaulées (6) soit plus grande que l'épaisseur du support d'enregistrement afin que toute disposition angulaire dudit disque (D) par rapport auxdites plaques inférieure et supérieure (1b, 1a) soit limitée par lesdites premières parties épaulées (5) en association avec lesdites secondes parties épaulées (6), d'une manière telle que les surfaces intérieures des plaques ne portent à aucun moment contre la surface d'enregistrement du disque.

2. Cartouche à disque selon la revendication 1, caractérisée en ce que la différence entre la hauteur (m) de la première partie épaulée et la hauteur de la seconde partie épaulée est de 0,1 mm à 1,0 mm.
